# FASCICULE DE BREVET EUROPEEN

(11) **EP 1 375 284 B1**
(45) Date de publication et mention de la délivrance du brevet: **05.10.2005**
(21) Numéro de dépôt: 03014380.4
(22) Date de dépôt: 26.06.2003
(51) Int. Cl.: B60T 11/26

(54) **Réservoir de liquide de frein, en particulier pour véhicule automobile**
Bremsflüssigkeitsreservoir, insbesondere für ein Kraftfahrzeug
Brake fluid reservoir, in particular for an automobile vehicle

(30) Priorité: 28.06.2002 FR 0208169
(43) Date de publication de la demande: 02.01.2004
(73) Titulaire: ROBERT BOSCH GMBH, 70442 Stuttgart (DE)
(72) Inventeur: Hurwic, Aleksander, 75020 Paris (FR)
(74) Mandataire: Hurwic, Aleksander Wiktor

(56) Documents cités:
- EP-A- 0 342 078
- DE-A- 1 909 001
- DE-A- 4 120 667
- DE-A- 10 038 982
- GB-A- 1 463 502
- US-A- 3 216 198
- US-B1- 6 298 961

## Description

L'invention concerne un réservoir de liquide de frein, en particulier pour véhicule automobile.

Les réservoirs de liquide de frein connus sont réalisés en matériau rigide et sont en général disposés au-dessus des maîtres-cylindres des circuits de freinage auxquels ils sont raccordés, pour que le liquide de frein puisse s'écouler par gravité des réservoirs vers les maîtres cylindres.

Pour éviter qu'une dépression, qui risquerait d'empêcher le liquide de s'écouler, puisse se créer dans un réservoir de liquide de frein, l'intérieur du réservoir est relié à l'atmosphère environnante par un orifice d'évent, pour le maintien de la pression atmosphérique à l'intérieur du réservoir. Toutefois, parce que le liquide de frein est très sensible à l'humidité, car la vapeur d'eau se dissout dans le liquide de frein et abaisse sa température d'ébullition avec un risque de bouchon de vapeur (vapor lock) dans les circuits de freinage, et qu'il est aussi très inflammable, il faut éviter de mettre ce liquide en contact avec l'air ou de le laisser s'échapper à l'air libre, et des systèmes de chicanes doivent être montés à cet effet dans les trous d'évent des réservoirs.

Par ailleurs, il est usuel de monter dans ces réservoirs des moyens de détection de niveau, qui sont en général enfermés dans des ampoules de verre dont la fragilité rend la manipulation et le montage assez délicats, avec des risques inévitables de casse de ces ampoules.

D'autre part, GB-A-1 463 502 décrit un dispositif de purge pour circuit de freinage comportant une paroi souple permettant l'écoulement du liquide de frein lors de la purge.

L'invention a notamment pour but d'apporter une solution simple, efficace et économique à ces problèmes.

Elle a pour objet un réservoir de liquide de frein, qui puisse être isolé de l'atmosphère ambiante tout en évitant les risques de dépression à l'intérieur du réservoir.
L'invention a principalement pour objet un réservoir de liquide de frein, en particulier pour véhicule automobile, une partie au moins de ce réservoir étant destinée à contenir du liquide de frein, cette partie étant fermée de façon étanche par rapport à l'atmosphère environnante et comprenant au moins une paroi étanche et souple, permettant d'ajuster sa contenance au volume du liquide de frein et/ou d'air qu'elle contient, pour éviter une mise en dépression du réservoir quand le volume de liquide de frein diminue dans le réservoir,
ladite paroi souple formant une partie supérieure (74) du réservoir, dont la partie inférieure est rigide, caractérisé en ce qu'il comporte des moyens d'accès sur la partie rigide.

La paroi souple présente dans le réservoir selon l'invention peut suivre une baisse du niveau du liquide dans le réservoir et fait varier le volume interne du réservoir sans que cela entraîne une modification de la pression dans le réservoir, de sorte que ce dernier peut être totalement isolé de l'atmosphère environnante sans risque de dépression interne. Cet isolement évite toute mise en contact du liquide de frein avec de la vapeur d'eau dans le réservoir et empêche également le liquide de frein de s'échapper hors du réservoir.

Dans un mode de réalisation préféré de l'invention, la paroi souple forme une poche à l'intérieur du réservoir et est initialement remplie de liquide de frein. Elle comprend avantageusement en partie inférieure des moyens de sortie de liquide, qui sont raccordés de façon étanche à un second réservoir placé à un niveau inférieur à celui du premier réservoir cité et comportant des moyens de liaison à un circuit de freinage.

Dans une forme de réalisation particulièrement intéressante de l'invention, les moyens de sortie de la poche sont obturés initialement par une membrane étanche et les moyens de raccordement au second réservoir comprennent des moyens de perforation de cette membrane.

En variante, le réservoir selon l'invention peut comprendre deux poches précitées remplies initialement de liquide de frein et dont chacune est raccordée à un compartiment du second réservoir, chaque compartiment de ce second réservoir étant relié à un circuit de freinage.

L'invention sera mieux comprise, et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe verticale d'un réservoir de liquide de frein selon l'invention, relié à un circuit de freinage ;
- la figures 2 est une vue schématique en coupe verticale d'une variante de réalisation du réservoir selon l'invention.

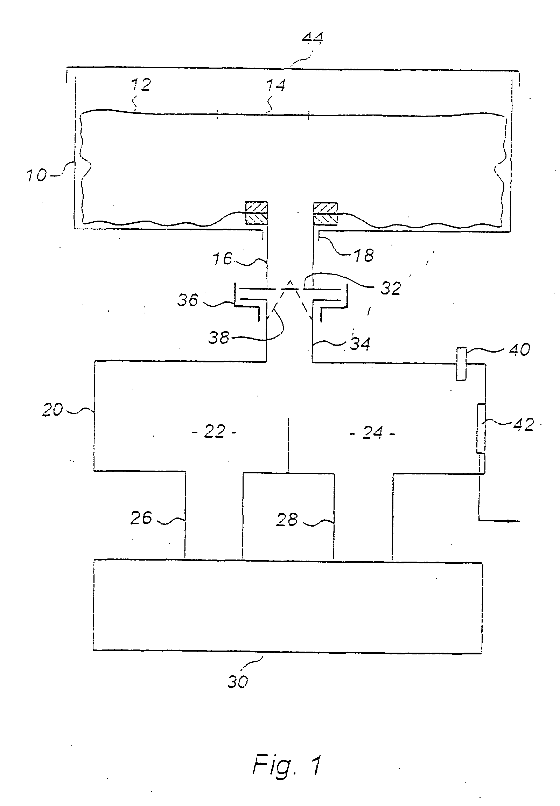

En figure 1, la référence 10 désigne un premier réservoir ou réservoir supérieur qui contient une poche 12 en matériau souple et étanche au liquide de frein, réalisée par exemple en une matière plastique appropriée résistant chimiquement au liquide de frein et comportant éventuellement un revêtement extérieur d'étanchéité, tel par exemple qu'une couche mince d'aluminium ou analogue. Dans ce cas, la partie supérieure de la poche 12 comprend avantageusement une fenêtre transparente 14 permettant une observation visuelle de l'intérieur de cette poche.

La partie inférieure de la poche 12 est reliée de façon étanche à une tubulure 16 qui s'étend à travers un orifice 18 de la paroi inférieure du réservoir 10 en direction d'un second réservoir 20 placé à un niveau inférieur à celui du premier réservoir 10 et comportant deux compartiments 22, 24 reliés chacun par un conduit 26, 28 respectivement à un double circuit de freinage 30 d'un type classique.

L'extrémité inférieure de la tubulure 16 est initialement fermée par une membrane étanche 32 qui est perforée automatiquement à la fixation de l'extrémité inférieure de la tubulure 16 sur l'extrémité supérieure d'un conduit 34 d'alimentation du second réservoir 20.

Par exemple, la jonction étanche entre la tubulure 16 et le conduit 34 est réalisée par vissage d'une bague filetée 36 qui provoque successivement le serrage l'une sur l'autre à étanchéité des brides d'extrémité de la tubulure 16 et du conduit 34, puis la perforation de la membrane 32 par un élément pointu 38 monté fixement à l'intérieur du conduit 34, en partie supérieure de celui-ci.

Les deux compartiments 22, 24 du réservoir inférieur 20 sont séparés l'un de l'autre en partie inférieure et communiquent en partie supérieure, ce qui permet de conserver un niveau minimal de liquide dans l'un des compartiments dans le cas d'une fuite de liquide dans le circuit de freinage alimenté par l'autre compartiment.

On prévoit également une soupape de sécurité 40 sur le second réservoir 20, cette soupape de sécurité permettant un échappement à l'extérieur en cas de surpression à l'intérieur des réservoirs 10, 20, pour éviter leur éclatement. Cette soupape forme également des moyens d'accès au réservoir pour le remplissage. Mais on pourrait prévoir des moyens d'accès séparés formés par un conduit obturable.

Un détecteur de niveau 42 d'un type classique est également monté à l'intérieur du second réservoir 20 et est relié à un circuit extérieur de signalisation d'un manque de liquide de frein.

Initialement, la poche 12 est remplie entièrement de liquide de frein qui est isolé de l'atmosphère environnante par la membrane étanche 32 fermant la tubulure de sortie 16 de la poche 12.

Le réservoir supérieur 10 comprend avantageusement un couvercle amovible 44 non étanche à l'air et de préférence transparent, permettant de placer sans difficulté une poche 12 remplie de liquide de frein à l'intérieur de ce réservoir et de faire passer sa tubulure de sortie 16 par l'orifice 18 du réservoir. Le vissage de la bague filetée 36 sur l'extrémité inférieure de la tubulure 16 permet de raccorder à étanchéité cette tubulure au conduit 34 du réservoir inférieur 20 et de perforer la membrane 32. Les tubulures du circuit de freinage 30 ont été remplies initialement de liquide de frein et le raccordement de la poche 12 au réservoir inférieur 20 permet de compléter le niveau dans ce réservoir. La souplesse de la poche 12 lui permet de s'affaisser dans le réservoir supérieur 10 au fur et à mesure de l'écoulement du liquide de frein dans le réservoir inférieur 20. Cet écoulement ne provoque aucune entrée d'air dans la poche 12, ni aucune dépression relative. Le liquide de frein est ainsi bien protégé de tout contact avec l'atmosphère ambiante et de la vapeur d'eau qu'elle peut contenir. Si le détecteur 42 signale une baisse du niveau du liquide de frein en dessous d'un niveau minimal, il suffit de dévisser la bague 36 et de changer la poche 12 contenue dans le réservoir supérieur 10.

Le réservoir selon la présente invention est particulièrement adaptée à un remplissage sous vide du liquide de frein sur chaîne de montage. En effet, les moyens d'accès au réservoir permettent d'une part de réaliser le vide dans le circuit de freinage, et d'autre part de le remplir en liquide de frein à l'aide d'un dispositif de purge et de remplissage raccordé hermétiquement aux moyens d'accès.
Le remplissage s'effectue comme suit :
- la poche est raccordée de manière étanche par vissage de la bague 36 sur la tubulure 16 de la poche suffisamment pour obtenir une étanchéité à l'air et au liquide mais pas suffisamment pour provoquer la perforation de la membrane 32.
- Le vide est réalisé dans le circuit de freinage par la soupape 40.
- Le liquide est envoyé dans le circuit de freinage par la soupape jusqu'à un niveau déterminé.
- On visse la bague 36 à fond de filet de manière à perforer la membrane 32.
   Pour améliorer la sécurité, on peut placer deux poches 12 remplies de liquide de frein côte à côte dans le réservoir supérieur 10, et raccorder l'une de ces poches à un compartiment 22 du réservoir inférieur 20 et l'autre poche à l'autre compartiment 24 de ce réservoir inférieur. Dans ce cas, les deux compartiments 22, 24 peuvent être totalement séparés l'un de l'autre.

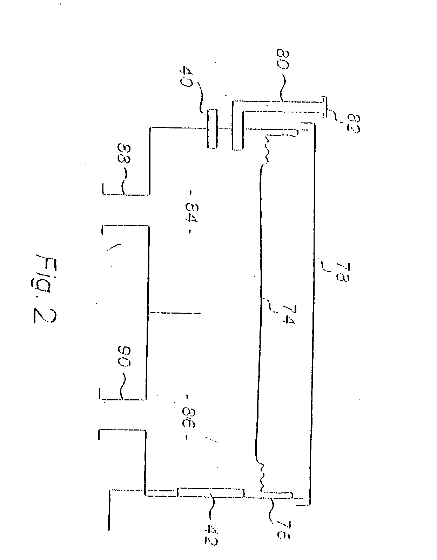

Dans la variante de réalisation de la figure 2, le réservoir est réalisé essentiellement en matériau rigide, à l'exception de sa paroi supérieure 74 qui est en matière souple, étanche et résistante au liquide de frein, cette paroi souple 74 étant fixée à sa périphérie de façon étanche sur le bord supérieur des parois latérales ou périphériques 76 du réservoir.

Un couvercle amovible 78 peut être monté sur le bord supérieur du réservoir pour protéger la paroi souple 74. Celle-ci a des dimensions supérieures aux dimensions transversales internes du réservoir de façon à pouvoir suivre par déformation mais sans étirement et donc sans force de rappel, une baisse du niveau du liquide de frein dans le réservoir.

Dans cette forme de réalisation, le réservoir comprend des moyens d'accès au réservoir portés par la partie rigide et formés par un conduit de remplissage 80 obturable à étanchéité par un bouchon 82, ce conduit 80 s'étendant depuis le haut du réservoir et débouchant à l'intérieur de celui-ci sous la paroi souple 74. Une soupape de sécurité 40 est également montée sur la paroi périphérique du réservoir sous la paroi souple 74. Un détecteur de niveau 42 peut également être monté dans le réservoir, sous cette paroi souple, comme représenté. La mise sous vide du réservoir s'effectue par le conduit 80, ainsi que le remplissage en liquide de frein.

Pour le reste, la partie inférieure du réservoir peut comprendre deux compartiments 84, 86 raccordés chacun par un conduit 88, 90 respectivement à un circuit de freinage, ces deux compartiments communiquant entre eux en partie supérieure comme déjà décrit.

## Revendications

1. Réservoir de liquide de frein, en particulier pour véhicule automobile, une partie au moins de ce réservoir étant destinée à contenir du liquide de frein, cette partie étant fermée de façon étanche par rapport à l'atmosphère environnante et comprenant au moins une paroi étanche et souple (12, 68, 74), permettant d'ajuster sa contenance au volume du liquide de frein et/ou d'air qu'elle contient, pour éviter une mise en dépression du réservoir quand le volume de liquide de frein diminue dans le réservoir, ladite paroi souple formant une partie supérieure (74) du réservoir, dont la partie inférieure est rigide, **caractérisé en ce qu'**il comporte des moyens d'accès (80) sur la partie rigide formés par un conduit de remplissage (80) obturable à étanchéité par un bouchon (82), ce conduit (80) s'étendant depuis le haut du réservoir et débouchant à l'intérieur de celui-ci sous la paroi souple (74).

2. Réservoir selon la revendication 1 **caractérisé en ce que** ladite paroi souple forme une poche (12) destinée à contenir du liquide de frein à l'intérieur du réservoir (10).

3. Réservoir selon l'une des revendications précédentes, **caractérisé en ce que** ladite paroi souple comprend au moins une fenêtre transparente (14) de contrôle visuel de son contenu.

4. Réservoir selon l'une des revendications précédentes, **caractérisé en ce qu'**il comprend au moins une soupape de sécurité (40) et un détecteur de niveau (42) montés dans la partie du réservoir destinée à être remplie de liquide de frein.

## Patentansprüche

1. Bremsflüssigkeitsbehälter, insbesondere für ein Kraftfahrzeug, wobei mindestens ein Teil dieses Behälters dazu bestimmt ist, Bremsflüssigkeit zu enthalten, wobei dieser Teil in dichter Weise bezüglich der Umgebungsatmosphäre geschlossen ist und mindestens eine dichte und nachgiebige Wand (12, 68, 74) aufweist, die es ermöglicht, sein Fassungsvermögen an das Bremsflüssigkeits- und/oder Luftvolumen, das er enthält, anzupassen, um die Erzeugung eines Unterdrucks im Behälter zu vermeiden, wenn das Bremsflüssigkeitsvolumen im Behälter sinkt, wobei die nachgiebige Wand einen oberen Teil (74) des Behälters bildet, wobei der untere Teil starr ist, **dadurch gekennzeichnet, dass** er Mittel (80) für den Zugang zum starren Teil aufweist, die durch eine Füllleitung (80) gebildet sind, welche durch einen Stopfen (82) dicht verschlossen werden kann und sich ausgehend vom oberen Abschnitt des Behälters erstreckt und unter der nachgiebigen Wand (74) in diesen mündet.

2. Behälter nach Anspruch 1, **dadurch gekennzeichnet, dass** die nachgiebige Wand eine Kammer (12) bildet, die dazu bestimmt ist, Bremsflüssigkeit im Inneren des Behälters (10) zu enthalten.

3. Behälter nach einem der vorhergehenden Ansprüche, **dadurch gekennzeichnet, dass** die nachgiebige Wand mindestens ein durchsichtiges Fenster (14) zur Sichtkontrolle seines Inhalts aufweist.

4. Behälter nach einem der vorhergehenden Ansprüche, **dadurch gekennzeichnet, dass** er mindestens ein Sicherheitsventil (40) und einen Füllstandsanzeiger (42) aufweist, die in dem Teil des Behälters angebracht sind, der dazu bestimmt ist, mit Bremsflüssigkeit gefüllt zu sein.

## Claims

1. Brake fluid reservoir, particularly for a motor vehicle, at least part of this reservoir being intended to contain brake fluid, this part being sealed with respect to the surrounding atmosphere and comprising at least one impervious and flexible wall (12, 68, 74) allowing its capacity to be adjusted to the volume of brake fluid and/or air it contains, so as to avoid placing the reservoir in depression when the volume of brake fluid in the reservoir drops, said flexible wall forming an upper part (74) of the reservoir, the lower part of which is rigid, **characterized in that** it comprises access means (80) on the rigid part, which means are formed by a filling pipe (80) that can be sealed off using a plug (82), this pipe (80) running from the top of the reservoir and opening into this reservoir under the flexible wall (74).

2. Reservoir according to Claim 1, **characterized in that** said flexible wall forms a pouch (12) intended to contain brake fluid inside the reservoir (10).

3. Reservoir according to either of the preceding claims, **characterized in that** said flexible wall comprises at least one transparent window (14) for visually checking its contents.

4. Reservoir according to one of the preceding claims, **characterized in that** it comprises at least one safety valve (40) and a level detector (42) that are mounted in the part of the reservoir intended to be filled with brake fluid.
